# EUROPÄISCHE PATENTSCHRIFT

(11) **EP 3 223 996 B1**
(45) Veröffentlichungstag und Bekanntmachung des Hinweises auf die Patenterteilung: **21.09.2022**
(21) Anmeldenummer: 15785189.0
(22) Anmeldetag: 14.10.2015
(51) Int. Cl.: B23K 37/02, B23K 26/08, B23Q 1/01, B23K 26/38, E04C 3/04

(54) **LASERSCHNEIDMASCHINE**
LASER CUTTING MACHINE
MACHINE DE DÉCOUPE AU LASER

(30) Priorität: 24.11.2014 EP 14194596
(43) Veröffentlichungstag der Anmeldung: 04.10.2017
(73) Patentinhaber: Bystronic Laser AG, 3362 Niederönz (CH)
(72) Erfinder: BOSSONI, Sergio, 8048 Zürich (CH)
(74) Vertreter: Fink Numrich Patentanwälte PartmbB
(86) Internationale Anmeldenummer: PCT/IB2015/057862
(87) Internationale Veröffentlichungsnummer: WO 2016/083916

(56) Entgegenhaltungen:
- WO-A1-2007/144906
- WO-A1-2013/160392
- WO-A2-2008/056244
- DATABASE WPI Week 201174 Thomson Scientific, London, GB; AN 2011-N72471 XP002752257, -& CN 102 198 593 A (WUXI HUALIAN PRECISION MACHINERY CO LTD) 28. September 2011 (2011-09-28)

## Beschreibung

Die Erfindung betrifft eine Laserschneidmaschine, bei welcher ein Laserschneidkopf mittels eines Führungssystems entlang zweier vorzugsweise orthogonaler Achsen über eine Werkstückauflage geführt werden kann, wobei der Laserschneidkopf auf einer in Form eines im Wesentlichen geraden, kastenförmigen Profils ausgebildeten Brücke entlang dieser Brücke verschiebbar geführt ist, wobei das Profil zumindest eine Führung für einen den Laserschneidkopf tragenden Schneidwagen aufweist, und wobei aus einer auf die Werkstückauflage lotrechten Richtung gesehen der Schwerpunkt des Laserschneidkopfes immer neben der vertikalen Symmetriefläche der Brücke liegt, gemäss dem Oberbegriff des Anspruchs 1.

Bei Laserschneidmaschinen zur Metallbearbeitung, insbesondere zum Schneiden von Werkstücken aus Flachmaterial, ist der Laserschneidkopf längs einer Schneidbrücke verschiebbar, welche Brücke ihrerseits in Führungen entlang eines das Flachmaterial aufnehmenden Schneidtisches verschiebbar ist. Mit diesem Führungssystem ist der Laserschneidkopf in zwei vorzugsweise orthogonalen Richtungen über jeden Punkt des Bearbeitungsbereiches des Flachmaterials platzierbar. Weiters kann der Laserschneidkopf vorzugsweise auch senkrecht zur Oberfläche des Schneidtisches und damit auch des Flachmaterials angehoben bzw. abgesenkt werden.

Typischerweise ist die Brücke, welche den Laserschneidkopf verschiebbar trägt, wobei auch ein Kabelschlepp mit Versorgungs-, Steuer- und Sensorleitungen entlang der Brücke zum Laserschneidkopf geführt ist, aus einem kastenförmigen, im Querschnitt etwa rechteckigen Profil gefertigt, welches weit unterhalb seines Schwerpunkts geführt wird. Beispiele für derartige, im Wesentlichen rechteckige Profile für die Brücken von Laser-Portal-Maschinen sind in der DE202005014428, der WO2013160392 (die als Basis für den Oberbegriff des Anspruchs 1 dient) der WO2015086724 zu finden.

Derartige Brücken aus rechteckigen Kastenprofilen aus Stahlblech haben den Nachteil des Parallelogramm-Effektes, eines oftmals relativ geringen Steifigkeits-zu-Gewichts-Verhältnisses, und der ungünstigen Schwerpunktslage des Schneidwagens mit dem Schneidkopf ausserhalb der Kraftübertragungsstellen an die Stützstruktur. Überdies liegt bei diesen Konstruktionen ein allenfalls vorgesehener Faltenbalg auf der Seite des Schneidkopfes direkt im Bereich der von der Bearbeitungszone ausgehenden Laserreflexionen und Spritzer heissen, geschmolzenen Materials, die den Faltenbalg schwer beschädigen können.

Für ein mit einer Brücke ausgestattetes Messgerät ist in der WO2008056244A2 ein horizontaler Querbalken offenbart, der aus einer Vielzahl von im Querschnitt dreieckigen Balkenelementen zusammengesetzt ist und im Gesamten ebenfalls einen dreieckigen Querschnitt mit einer Seite parallel zur Horizontalen aufweist. Auf diesem Querbalken ist ein Wagen verfahrbar, der einen vertikal verfahrbaren Messkopf trägt.

Eine Bohr- und Fräsmaschine ist in der CN102198593A beschrieben, wobei der Bearbeitungskopf horizontal entlang eines Querbalkens verschiebbar ist, der einen im Wesentlichen dreiecksförmigen Querschnitt aufweist. Zwei Seiten sind vertikal bzw. horizontal orientiert, während die dritte Seite gegen die Vertikale geneigt ist und an dieser dritten Seite der Bearbeitungskopf den Querbalken seitlich überragend angeordnet ist.

Die Druckschrift WO 2007/144906 A1 offenbart eine Koordinatenmessmaschine mit einer verfahrbaren Brücke, an der ein beweglicher Wagen vorgesehen ist. Die Brücke hat einen Querbalken mit einem dreiecksförmigen Querschnitt.

Es war daher die Aufgabe der vorliegenden Erfindung, eine Laserschneidmaschine mit einer Brücke anzugeben, welche diese Nachteile vermindert bzw. gar nicht aufweist. Eine weitere Aufgabe war eine Laserschneidmaschine, bei welcher die Brücke und deren vorteilhafte Eigenschaften zur weiteren Optimierung der an sich entgegenlaufenden Anforderungen von geringem Gewicht und guten mechanischen Eigenschaften eingesetzt ist.

Diese Aufgaben werden durch die Merkmale des unabhängigen Anspruchs 1 gelöst. Weitere Erfindungsmerkmale gehen aus den abhängigen Ansprüchen sowie den Abbildungen hervor.

Zur Lösung der Aufgaben ist gemäss der vorliegenden Erfindung eine Laserschneidmaschine vorgesehen, bei der der Schneidwagen und/oder der Laserschneidkopf mittels eines Kabelschlepps mit einer Energieversorgung, Laserquelle od. dgl. und/oder einer Auswerteeinheit, einer Steuereinheit od. dgl. verbunden ist, wobei die Brücke derart ausgeführt ist, dass zumindest zwei einander in Bezug auf die vertikale Symmetriefläche gegenüberliegende Seitenflächen des Profils zumindest über einen Teil der Höhe des Profils miteinander einen sich in Richtung auf den Bearbeitungsbereich hin öffnenden Winkel ungleich Null und kleiner 180°, vorzugsweise kleiner 90°, einschliessen, wobei eine zweite Seitenfläche, welche dem Schneidwagen bzw. dem Bearbeitungskopf bezüglich der vertikalen Symmetriefläche abgewandt liegt, zumindest über einen Teil ihrer Höhe einen geneigten Abschnitt aufweist, der einen Winkel zwischen 10° und 60°, vorzugsweise zwischen 20° und 45°, mit der vertikalen Symmetriefläche einschliesst, und wobei an der zweiten Seitenfläche in dem dem Bearbeitungsbereich näherliegenden Abschnitt eine Auskragung mit einer im Wesentlichen senkrecht auf den geneigten Abschnitt verlaufenden Oberseite vorgesehen ist. Darauf ist das untere Trum eines in Längsrichtung der Brücke verlaufenden Abschnittes des Kabelschlepps abgestützt und somit geschützt von beim Schneiden auftretenden Materialspritzern abgelegt. Dadurch entsteht eine Brücke mit auf den Bearbeitungsbereich hin breiter werdender Trapez- oder Dreiecksform, wodurch der Scher-Effekt (Parallellogramm-Effekt) eines herkömmlichen Rechteckrohres umgangen wird und die von der Brücke ausgehenden Kräfte optimal in die Trägerstruktur übertragen werden können. Weiter kann so auch der Kraftfluss vom Laserschneidkopf bzw. dem ihn tragenden Schneidwagen über die Führung ideal in die Trägerstruktur geleitet werden. Überdies können insbesondere auf der Seite des Laserschneidkopfes beim Schneidprozess auftretender Staub bzw. Materialspritzer einen allenfalls vorgesehenen Faltenbalg nicht so leicht beschädigen. Vorzugsweise ist dabei die Oberseite der Brücke als dreiecksförmige Kante gestaltet und die Brücke in ihrer Gesamtheit ist im Wesentlichen als dreiecksförmiges Kastenprofil ausgeführt. Überdies können Laserreflexionen und Materialspritzer nur in geringem Ausmass bis gar nicht auf den Faltenbalg gelangen und diesen beschädigen. Auch Staub setzt sich nicht so leicht darauf ab. Bei komplett dreiecksförmiger Ausbildung der Oberseite der Brücke können sich Materialspritzer und Staub nicht auf der Oberseite der Brücke absetzen, sondern können entlang der schrägen Flächen abrutschen.

Bevorzugt ist dabei erfindungsgemäss vorgesehen, dass zumindest die dem Schneidwagen bzw. dem Bearbeitungskopf zugewandte Seitenfläche des Profils zumindest über einen Teil ihrer Höhe einen Winkel zwischen 10° und 60°, vorzugsweise zwischen 20° und 45°, mit der vertikalen Symmetriefläche einschliesst. Durch diese Neigung an der kräftemässig durch das Gewicht des Schneidwagens und des auskragenden Laserschneidkopfes belasteten Seite der Brücke kann trotz leichter Bauweise eine hohe Biegesteifigkeit (sowohl in Längsrichtung der Brücke als auch senkrecht dazu) sowie eine hohe Torsionssteifigkeit erreicht werden. Ein allfälliger Faltenbalg liegt ausserhalb der Bahn von Laserreflexionen und von Materialspritzern aus der Bearbeitungszone und ist damit gegenüber Beschädigungen durch Laserreflexionen und durch Spritzer mit heissem Material weitestgehend geschützt. Bei entsprechendem Verhältnis von Neigung der Seitenfläche und Höhe der Brücke kann der Schwerpunkt der Anordnung von Schneidwagen und Laserschneidkopf auch nach innerhalb der senkrechten Projektion der Kraftübertragungsstellen von der Brücke auf die Stützstruktur versetzt werden.

Für die momenten- und schwingungsoptimierte Anbringung des Laserschneidkopfes an der Brücke unter Zwischenschaltung eines Schneidwagens sieht eine weitere erfindungsgemässe Ausführungsform vor, dass zumindest zwei über die Höhe einer Seitenfläche, vorzugsweise einer gegenüber der vertikalen Symmetriefläche geneigten Seitenfläche, beabstandete Führungen für einen den Laserschneidkopf tragenden Schneidwagen vorgesehen sind und eine äussere Begrenzungsfläche auf der Seite des Laserschneidkopfes definieren, wobei diese äussere Begrenzungsfläche mit der vertikalen Symmetriefläche einen Winkel zwischen 10 und 60°, vorzugsweise einen Winkel zwischen 20 und 45°, einschliesst.

Um die Brücke in der gewünschten nahen Distanz doch mit genügend Freiraum zwischen Brücke und Flachmaterial bewegen zu können, sieht eine weitere bevorzugte Ausführungsform der Erfindung vor, dass eine der Werkstückauflagezugewandte Seitenfläche des Profils über mehr als 30%, vorzugsweise über mehr als die Hälfte, der Breite des Profils bzw. des Abstützungsabstandes zwischen den beiden Kraftübertragungsstellen, im Wesentlichen eben und parallel zur Werkstückauflage verläuft.

Für eine gewichtsoptimierte Bauweise ist das optionale Erfindungsmerkmal vorgesehen, dass das Profil aus miteinander verbundenen abgekanteten Blechen gefertigt ist, vorzugsweise in Form eines Hohlprofils mit zumindest einer inneren Querverstrebung. Eine derartig aufgebaute Brücke ist trotz bester mechanischer sowie schwingungsmässiger Eigenschaften im Gegensatz zu bisherigen Brücken massenoptimiert aufgebaut. Es wird weniger Material verwendet und es können leichte Stahlkonstruktionen verwendet werden. Diese Brücke ermöglicht weiters eine leichte Montage, da sie nicht gesteckt werden muss, sondern in einem Stück gefertigt, gehandhabt und eingebaut werden kann.

Bevorzugt ist als weiteres Erfindungsmerkmal vorgesehen, dass die Brücke zumindest an der der Werkstückauflage zugewandten Seite, vorzugsweise an den zwei in Längsrichtung gegenüberliegenden Enden, gelagert und vorzugsweise orthogonal zur Längserstreckung der Brücke gegenüber der Werkstückauflage verschiebbar gelagert ist.

Weiters ist ein bevorzugtes Erfindungsmerkmal, dass die Lagerung der Brücke und/oder deren Führung für die Verschiebung gegenüber der Werkstückauflage unterhalb des Schwerpunktes der Brücke angeordnet ist.

Eine besonders vorteilhafte Ausführungsform der Erfindung sieht weiters vor, dass zumindest jede Kraftübertragsstelle von der Brücke auf deren Trägerstruktur in einem Bereich von +/- 100mm vom Schnittpunkt der Verlängerung einer Begrenzungsfläche mit der Oberkante der Trägerstruktur liegt. Dies ergibt eine optimale Einleitung der Kräfte von der Brücke in die Trägerstruktur.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Die Bezugszeichenliste ist Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
Fig. 1 ein Querschnitt durch eine herkömmliche Schneidbrücke gemäss dem Stand der Technik, mit rechteckigem Profilquerschnitt, und
Fig. 2 eine schematische Darstellung einer bevorzugten Ausführungsform einer Brücke einer Laserschneidmaschine gemäss der Erfindung, im Querschnitt senkrecht zu ihrer Längserstreckung.

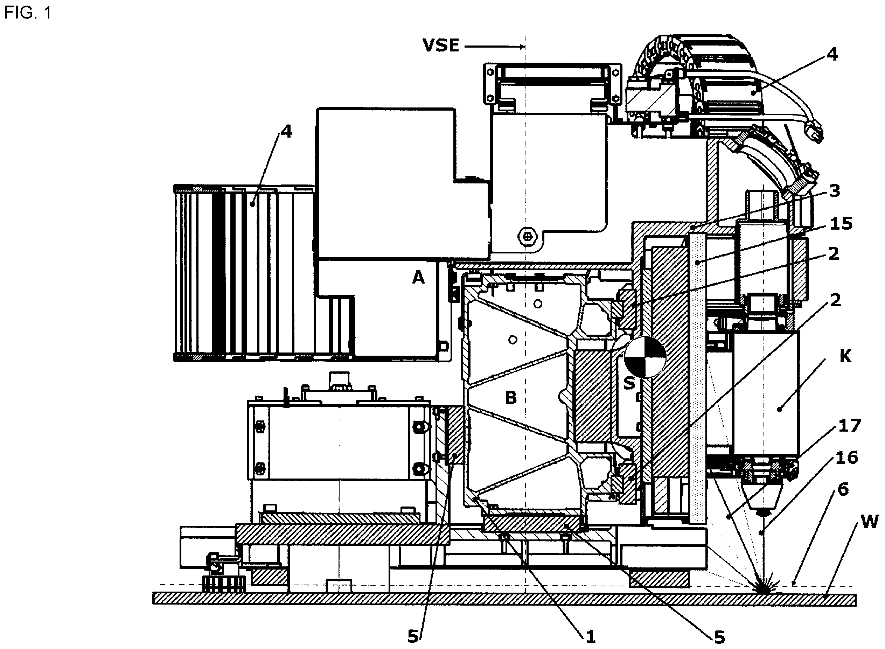

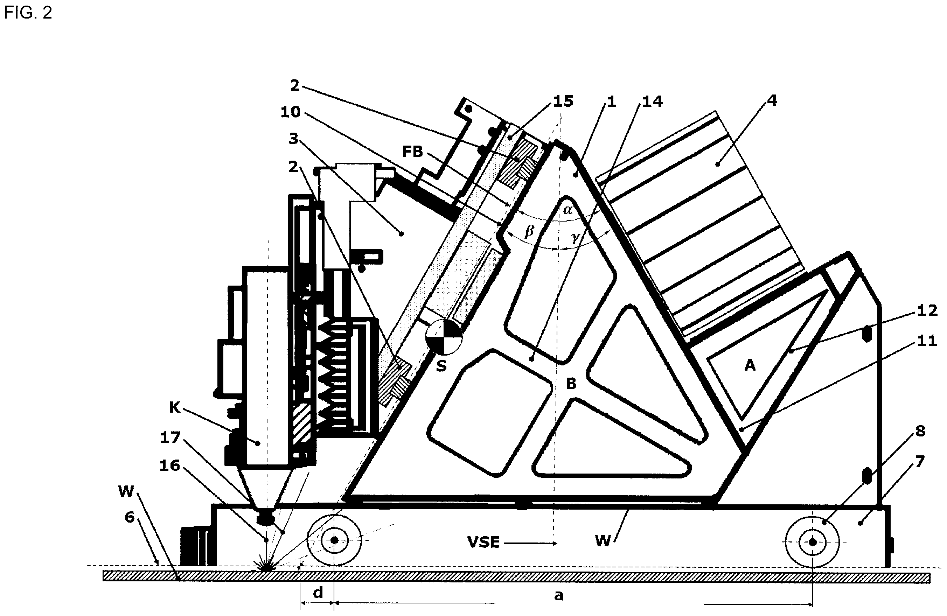

Die in Fig. 1 beispielhaft dargestellte Schneidbrücke B gemäss dem Stand der Technik besteht aus einem im Querschnitt im Wesentlichen rechteckigen Profil 1 mit Führungsschienen 2 für einen Schneidwagen 3. Dieser Schneidwagen ist auf den Führungsschienen 2 entlang der Längserstreckung (in Fig. 1 senkrecht auf die Papierebene) bewegbar und trägt den Laserschneidkopf K. Die Führungsschienen 2 definieren eine äussere Begrenzungsfläche FB der Brücke B, welche Teil des Führungssystems für den Laserschneidkopf K ist, um diesen entlang zweier vorzugsweise orthogonaler Achse über eine Werkstückauflage W (siehe Fig. 2) zu führen.

Die Brücke B, meist in Form eines geraden, kastenförmigen Profils ausgebildet, trägt typischerweise auch noch weitere Bauteile, beispielsweise einen Kabelschlepp 4 mit Versorgungs-, Steuer- und Sensorleitungen zum Laserschneidkopf K. Das Profil 1 der Brücke B ist meist unterhalb des Schwerpunkts in entsprechenden Strukturen 5 geführt bzw. gelagert. Der Schwerpunkt des Laserschneidkopfes K liegt, aus einer auf die Werkstückauflage lotrechten Richtung gesehen, immer neben der vertikalen Symmetriefläche VSE der Brücke B.

Die Brücke B selbst und alle damit verbundenen Elemente, insbesondere der Laserschneidkopf K, der Kabelschlepp 4, usw., sind ihrerseits in Führungen 6 entlang eines das Flachmaterial aufnehmenden Schneidtisches mit der Werkstückauflage W verschiebbar. Die Endstücke 7 der Brücke B sind dazu mit Stützrädern 8 versehen, die sich auf den Führungen 6 abstützen und Krafteinleitungspunkte von der Brücke B in deren Trägerstruktur am Maschinenrahmen definieren. Die Führungen 6 verlaufen dabei vorzugsweise orthogonal zur Längserstreckung der Brücke B.

Wie in der schematischen Darstellung der Fig. 2 einer bevorzugten Ausführungsform einer Brücke B zu erkennen ist, schliessen zwei einander in Bezug auf die vertikale Symmetriefläche VSE gegenüberliegende Seitenflächen 10, 11 des Profils 1 miteinander einen sich in Richtung auf den Bearbeitungsbereich (unterhalb des Profils 1) mit dem zu bearbeitenden Flachmaterial FL hin öffnenden Winkel α ungleich Null und kleiner 180°, vorzugsweise kleiner 90°, einschliessen. Dadurch entsteht eine Brücke mit auf den Bearbeitungsbereich hin breiter werdender Dreiecksform. Allenfalls kann diese Ausbildung der Seiten 10, 11 auch nur über einen Teil der Höhe des Profils 1 vorgesehen sein. Auch eine Trapezform des Profils 2 wäre möglich, indem sich die Seitenflächen 10, 11 nicht schneiden, sondern durch eine obere Deckfläche miteinander verbunden sind.

Der bevorzugte Winkelbereich für die Seitenfläche 10, an welcher der Schneidwagen 3 und der Laserschneidkopf K angebracht sind, mit der vertikalen Symmetrieebene VSE des Profils 1 liegt bei einem Winkel β zwischen 10° und 60°, vorzugsweise zwischen 20° und 45°. Die gegenüberliegende Seite 11, auf welcher sich typischerweise der Kabelschlepp 4 befindet, ist in gleicher Weise um einen Winkel γ geneigt, so dass die Brücke B in ihrer Gesamtheit ist im Wesentlichen als dreiecksförmiges Kastenprofil ausgeführt ist. Die Seite 11 könnte aber auch parallel zur vertikalen Symmetriefläche VSE liegen. Um trotz gewichtsoptimierter Bauweise und bereits sehr stabiler äusserer Formgebung des Profils 1 eine noch bessere mechanische Stabilität zu erzielen, ist das vorteilhafterweise aus miteinander verbundenen abgekanteten Blechen gefertigte Profil 1 vorzugsweise in Form eines Hohlprofils mit zumindest einer inneren Querverstrebung 14 ausgebildet.

An der dem Laserschneidkopf K gegenüberliegenden Seite der Brücke B ist die Seitenfläche 11 für die optimierte Anbringung des Kabelschlepps 4 mit einer Auskragung 12 versehen. Die Oberseite dieser Auskragung 12 verläuft im Wesentlichen senkrecht auf die Seitenfläche 11 bzw. den geneigten Abschnitt davon, und nimmt vorzugsweise das untere Trum des Kabelschlepps 4 auf.

Von besonderer Bedeutung für die momenten- und schwingungsoptimierte Anbringung des Laserschneidkopfes K an der Brücke B ist in jedem Fall die relative Lage der Führungen 2 für den Schneidwagen 3 bzw. den Laserschneidkopf K. Zumindest zwei über die Höhe einer Seitenfläche, vorzugsweise einer gegenüber der vertikalen Symmetriefläche VSE geneigten Seitenfläche 10, beabstandete Führungen 2 für den Schneidwagen 3 definieren ja eine äussere Begrenzungsfläche FB auf der Seite des Laserschneidkopfes K. Diese äussere Begrenzungsfläche FB muss mit der vertikalen Symmetriefläche VSE einen Winkel β zwischen 10 und 60°, vorzugsweise einen Winkel zwischen 20 und 45°, einschliessen.

Die der Werkstückauflage W zugewandte Seitenfläche des Profils 1 der Brücke B verläuft vorzugsweise über mehr als 30%, vorzugsweise über mehr als die Hälfte, der Breite des Profils 1 im Wesentlichen eben und parallel zur Werkstückauflage W. In bestimmten Anwendungsfällen müssen die oben genannten Bedingungen derart erweitert werden, dass anstelle der Breite des Profils 1 der Abstützungsabstand a, d.h. die Distanz zwischen den beiden Kraftübertragungsstellen von der Brücke B auf die Trägerstruktur, tritt. Dieser Abstand ist durch die Kontaktstellen der Rollen 8 an den Profilendstücken 7 mit den Führungen 6 definiert.

Bevorzugt erfolgt die Lagerung der Brücke B und/oder deren Führung für die Verschiebung gegenüber der Werkstückauflage W unterhalb des Schwerpunktes der Brücke B. Dazu sind die Führungen 6 und die Rollen 8 der Brücke B ebenso unterhalb des Schwerpunktes der Brücke B angeordnet.

Genauso wie die Kontaktpunkte der Rollen 8 mit den Führungen 6 reale Kraftübertragungsstellen definieren, können virtuelle Kraftübertragungsstellen an den Schnittpunkten der äusseren Begrenzungsflächen FB (auch an beiden Seiten des Profils 1) mit der Trägerstruktur, vorzugsweise ebenfalls den Führungen 6, definiert werden. Auf der dem Laserschneidkopf K gegenüberliegenden Seite der Brücke B ist diese Begrenzungsfläche FB gleich der geneigten Seitenfläche 11. Bevorzugt liegt der Abstand d der realen Kraftübertragungsstellen in einem Bereich von +/- 100mm von den virtuellen Kraftübertragungsstellen, d.h. vom Schnittpunkt der Verlängerung einer Begrenzungsflächen FB, 11 mit der Oberkante der Trägerstruktur.

Wie durch Vergleich der Fig. 1 und 2 zu erkennen ist, ist durch die geneigte Seite der Brücke B auf der Seite, auf welcher der Schneidwagen 3 und der Schneidkopf K angeordnet sind, auch ein die Führungen, Antriebe, usw. abdeckender Faltenbalg gegenüber Materialspritzern aus der Bearbeitungszone des Schneidkopfes K geschützt. Laserreflexionen und Spritzer können bei einer herkömmlichen Konstruktion wie in Fig. 1 dargestellt auf den Faltenbalg treffen und zu Löchern darin führen, was weiter zu Verschmutzungen unterhalb des Faltenbalges führt. Dadurch kann es zu Beschädigungen der Linearführungen, der Antriebe und der Messysteme kommen. Solche Materialspritzer treten vor allem bei Einstechvorgängen auf, wobei die Brücke B und der Schneidkopf K still stehen. Gemäss der vorliegenden Erfindung mit ihrer geneigten Seitenfläche 10 auf der Seite des Schneidkopfes K ist dies weitestgehend verhindert.

**Liste der Bezugszeichen**

| | |
|---|---|
| Profil | 1 |
| Führungen Schneidwagen | 2 |
| Schneidwagen | 3 |
| Kabelschlepp | 4 |
| Lagerstruktur | 5 |
| Führungen Brücke | 6 |
| Endstücke Brücke | 7 |
| Stützräder Brücke | 8 |
| Seitenfläche zu Schneidkopf | 10 |
| Seitenfläche hinten | 11 |
| Auskragung | 12 |
| Unterseite Brücke | 13 |
| Querverstrebungen | 14 |
| Faltenbalg | 15 |
| Laseraustritt | 16 |
| Laserreflexion | 17 |
| Abstützung Faltenbalg | A |
| Brücke | B |
| Begrenzungsfläche | FB |
| Schneidkopf | K |
| Vertikale Symmetrieebene | VSE |
| Werkstückauflage | W |
| Abstützungsabstand | a |
| Abstand | d |

## Patentansprüche

1. Laserschneidmaschine, bei welcher ein Laserschneidkopf (K) mittels eines Führungssystems entlang zwei vorzugsweise orthogonalen Achsen über eine Werkstückauflage (W) geführt werden kann, wobei der Laserschneidkopf (K) auf einer in Form eines im Wesentlichen geraden, kastenförmigen Profils ausgebildeten Brücke (B) entlang dieser Brücke verschiebbar geführt ist, wobei das Profil (1) zumindest eine Führung (2) für einen den Laserschneidkopf (K) tragenden Schneidwagen (3) aufweist, und wobei aus einer auf die Werkstückauflage (W) lotrechten Richtung gesehen der Schwerpunkt (S) des Laserschneidkopfes (K) immer neben der vertikalen Symmetriefläche (VSE) der Brücke (B) liegt, **dadurch gekennzeichnet, dass** der Schneidwagen (3) und/oder der Laserschneidkopf (K) mittels eines Kabelschlepps (4) mit einer Energieversorgung und/oder Laserquelle und/oder einer Auswerteeinheit verbunden ist und die Brücke derart ausgeführt ist, dass zumindest zwei einander in Bezug auf die vertikale Symmetriefläche (VSE) gegenüberliegende Seitenflächen (10, 11) des Profils (1) zumindest über einen Teil der Höhe des Profils (1) miteinander einen sich in Richtung auf den Bearbeitungsbereich hin öffnenden Winkel (α) ungleich Null und kleiner 180°, vorzugsweise kleiner 90°, einschliessen, wobei eine zweite Seitenfläche (11), welche dem Schneidwagen (3) bzw. dem Laserschneidkopf (K) bezüglich der vertikalen Symmetriefläche (VSE) abgewandt liegt, zumindest über einen Teil ihrer Höhe einen geneigten Abschnitt aufweist, der einen Winkel (γ) zwischen 10° und 60°, vorzugsweise zwischen 20° und 45°, mit der vertikalen Symmetriefläche (VSE) einschliesst, und an der zweiten Seitenfläche (11) in dem dem Bearbeitungsbereich näherliegenden Abschnitt eine Auskragung (12) mit einer im Wesentlichen senkrecht auf den geneigten Abschnitt verlaufenden Oberseite vorgesehen ist, wobei das untere Trum eines in Längsrichtung der Brücke (B) verlaufenden Abschnittes des Kabelschlepps (4) auf der Oberseite der Auskragung (12) der Brücke (B) abgestützt ist.

2. Maschine nach Anspruch 1, **dadurch gekennzeichnet, dass** zumindest die dem Schneidwagen (3) bzw. dem Laserschneidkopf (K) zugewandte Seitenfläche (10) des Profils (1) zumindest über einen Teil ihrer Höhe einen Winkel (β) zwischen 10° und 60°, vorzugsweise zwischen 20° und 45°, mit der vertikalen Symmetriefläche (VSE) einschliesst.

3. Maschine nach Anspruch 1 oder 2, **dadurch gekennzeichnet, dass** zumindest zwei über die Höhe einer Seitenfläche, vorzugsweise einer gegenüber der vertikalen Symmetriefläche (VSE) geneigten Seitenfläche, beabstandete Führungen (2) für einen den Laserschneidkopf (K) tragenden Schneidwagen (3) vorgesehen sind und eine äussere Begrenzungsfläche (FB) auf der Seite des Laserschneidkopfes (K) definieren, wobei diese äussere Begrenzungsfläche (FB) mit der vertikalen Symmetriefläche (VSE) einen Winkel (β) zwischen 10 und 60°, vorzugsweise einen Winkel zwischen 20 und 45°, einschliesst.

4. Maschine nach einem der Ansprüche 1 bis 3, **dadurch gekennzeichnet, dass** eine der Werkstückauflage (W) zugewandte Seitenfläche (13) des Profils (1) über mehr als 30%, vorzugsweise über mehr als die Hälfte, der Breite des Profils (1) bzw. des Abstützungsabstandes (a) zwischen den beiden Kraftübertragungsstellen, im Wesentlichen eben und parallel zur Werkstückauflage (W) verläuft.

5. Maschine nach einem der Ansprüche 1 bis 4, **dadurch gekennzeichnet, dass** das Profil (1) aus miteinander verbundenen abgekanteten Blechen gefertigt ist, vorzugsweise in Form eines Hohlprofils mit zumindest einer inneren Querverstrebung (14).

6. Maschine nach einem der vorhergehenden Ansprüche, **dadurch gekennzeichnet, dass** die Brücke (B) zumindest an der der Werkstückauflage (W) zugewandten Seite, vorzugsweise an den zwei in Längsrichtung gegenüberliegenden Enden (7), gelagert und vorzugsweise orthogonal zur Längserstreckung der Brücke (B) gegenüber der Werkstückauflage (W) verschiebbar gelagert ist.

7. Maschine nach einem der vorhergehenden Ansprüche, **dadurch gekennzeichnet, dass** die Lagerung der Brücke (B) und/oder deren Führung für die Verschiebung gegenüber der Werkstückauflage (W) unterhalb des Schwerpunktes der Brücke angeordnet ist.

8. Maschine nach einem der vorhergehenden Ansprüche, **dadurch gekennzeichnet, dass** zumindest jede Kraftübertragsstelle von der Brücke (B) auf deren Trägerstruktur in einem Bereich von +/- 100mm vom Schnittpunkt der Verlängerung einer Begrenzungsfläche (FB, 11) mit der Oberkante der Trägerstruktur (6) liegt.

## Claims

1. A laser cutting machine, in which a laser cutting head (K) can be guided by means of a guide system along two preferably orthogonal axes over a workpiece support (W), wherein the laser cutting head (K) is displaceably guided on a bridge (B), designed in the form of a substantially straight, box-like profile, along said bridge, wherein the profile (1) has at least one guide (2) for a cutting carriage (3) carrying the laser cutting head (K), and wherein the centre of gravity (S) of the laser cutting head (K) as viewed from a direction perpendicular to the workpiece support (W) is always next to the vertical plane of symmetry (VSE) of the bridge (B), **characterised in that** the cutting carriage (3) and/or the laser cutting head (K) is connected to an energy supply and/or laser source and/or an evaluation unit by means of a cable track (4), and the bridge is designed in such a way that at least two side surfaces (10, 11) of the profile (1) opposite one another in relation to the vertical plane of symmetry (VSE) together at least over part of the height of the profile (1) form an angle (α) that is not equal to zero and less than 180°, preferably less than 90°, which angle opens in the direction of the machining region, wherein a second side surface (11), which faces away from the cutting carriage (3) or the laser cutting head (K) with respect to the vertical plane of symmetry (VSE), has an inclined portion at least over part of the height thereof, which forms an angle (γ) between 10° and 60°, preferably between 20° and 45°, with the vertical plane of symmetry (VSE), and a projection (12) with an upper side extending substantially perpendicular to the inclined portion is provided on the second side surface (11) in the portion closer to the machining region, wherein the lower strand of a portion of the cable track (4) extending in the longitudinal direction of the bridge (B) is supported on the upper side of the projection (12) of the bridge (B).

2. The machine according to claim 1, **characterised in that** at least the side surface (10) of the profile (1) facing the cutting carriage (3) or the laser cutting head (K) forms, at least over part of the height thereof, an angle (β) of between 10° and 60°, preferably between 20° and 45°, with the vertical plane of symmetry (VSE).

3. The machine according to claim 1 or 2, **characterised in that** at least two guides (2) spaced apart over the height of a side surface, preferably a side surface inclined relative to the vertical plane of symmetry (VSE), are provided for a cutting carriage (3) carrying the laser cutting head (K) and define an outer boundary surface (FB) on the side of the laser cutting head (K), wherein said outer boundary surface (FB) forms an angle (β) of between 10 and 60°, preferably an angle of between 20 and 45°, with the vertical plane of symmetry (VSE).

4. The machine according to any one of claims 1 to 3, **characterised in that** a side surface (13) of the profile (1) facing the workpiece support (W) extends substantially in a planar manner and parallel to the workpiece support (W) over more than 30%, preferably over more than half, of the width of the profile (1) or of the support distance (a) between the two force transmission points.

5. The machine according to any one of claims 1 to 4, **characterised in that** the profile (1) is made from folded sheets of metal which are connected to one another, preferably in the form of a hollow profile with at least one inner cross strut (14).

6. The machine according to any one of the preceding claims, **characterised in that** the bridge (B) is mounted at least on the side facing the workpiece support (W), preferably on the two ends (7) which are opposite in the longitudinal direction and is displaceably mounted relative to the workpiece support (W) preferably orthogonal to the longitudinal extension of the bridge (B).

7. The machine according to any one of the preceding claims, **characterised in that** the mounting of the bridge (B) and/or the guide thereof for displacement relative to the workpiece support (W) is arranged below the centre of gravity of the bridge.

8. The machine according to any one of the preceding claims, **characterised in that** at least each force transmission point from the bridge (B) to the carrier structure thereof is in a range of +/- 100 mm from the intersection of the extension of a boundary surface (FB, 11) with the upper edge of the carrier structure (6).

## Revendications

1. Machine de découpe au laser, dans laquelle une tête de découpe au laser (K) peut être guidée au moyen d'un système de guidage le long de deux axes de préférence orthogonaux sur un support de pièce (W), la tête de découpe au laser (K) étant guidée de manière coulissante sur un pont (B) conçu en forme d'un profilé sensiblement rectiligne en forme de boîte le long de ce pont, le profilé (1) comportant au moins un guidage (2) pour un chariot de découpe (3) portant la tête de découpe au laser (K), et le centre de gravité (S) de la tête de découpe au laser (K) observé depuis une direction perpendiculaire au support de pièce (W) étant toujours voisin de la surface verticale de symétrie (VSE) du pont (B), **caractérisée en ce que** le chariot de découpe (3) et/ou la tête de découpe au laser (K) est relié(e) à une alimentation électrique et/ou à une source laser et/ou à une unité d'évaluation au moyen d'une chaîne porte-câbles (4) et le pont est conçu de telle manière qu'au moins deux surfaces latérales (10, 11) opposées du profilé (1) par rapport à la surface verticale de symétrie (VSE) au moins sur une partie de la hauteur du profilé (1) forment entre elles un angle (α) s'ouvrant dans la direction de la zone d'usinage, non nul et inférieur à 180°, de préférence inférieur à 90°, une seconde surface latérale (11), qui est tournée à l'opposé du chariot de découpe (3) ou de la tête de découpe au laser (K) par rapport à la surface verticale de symétrie (VSE), présentant une section inclinée au moins sur une partie de sa hauteur, qui forme un angle (γ) compris entre 10° et 60°, de préférence entre 20° et 45°, avec la surface verticale de symétrie (VSE), et sur la seconde surface latérale (11) dans la section plus proche de la zone d'usinage, est prévue une saillie (12) avec un côté supérieur sensiblement perpendiculaire à la section inclinée, le brin inférieur d'une section longitudinale du pont (B) de la chaîne porte-câbles (4) étant soutenu sur le côté supérieur de la saillie (12) du pont (B).

2. Machine selon la revendication 1, **caractérisée en ce qu'**au moins la surface latérale (10) du profilé (1) tournée vers le chariot de découpe (3) ou la tête de découpe au laser (K) forme avec la surface verticale de symétrie (VSE) un angle (β) compris entre 10° et 60°, de préférence entre 20° et 45° sur au moins une partie de sa hauteur.

3. Machine selon la revendication 1 ou 2, **caractérisée en ce qu'**au moins deux guidages (2) espacés sur la hauteur d'une surface latérale, de préférence une surface latérale inclinée par rapport à la surface verticale de symétrie (VSE), sont prévus pour un chariot de découpe (3) portant la tête de découpe au laser (K) et définissent une surface limite extérieure (FB) sur le côté de la tête de découpe au laser (K), cette surface limite extérieure (FB) formant un angle (β) compris entre 10 et 60°, de préférence un angle compris entre 20 et 45°, avec la surface verticale de symétrie (VSE).

4. Machine selon l'une quelconque des revendications 1 à 3, **caractérisée en ce qu'**une face latérale (13) du profilé (1) tournée vers le support de pièce (W) s'étend sur plus de 30 %, de préférence sur plus de la moitié, de la largeur du profilé (1) ou de la distance d'appui (a) entre les deux points de transmission de force, de manière essentiellement plane et parallèle au support de pièce (W).

5. Machine selon l'une quelconque des revendications 1 à 4, **caractérisée en ce que** le profilé (1) est réalisé à partir de tôles pliées reliées entre elles, de préférence sous la forme d'un profilé creux avec au moins une entretoise transversale intérieure (14).

6. Machine selon l'une quelconque des revendications précédentes, **caractérisée en ce que** le pont (B) est monté de manière coulissante au moins du côté tourné vers le support de pièce (W), de préférence sur les deux extrémités opposées (7) dans le sens longitudinal et de préférence orthogonalement à l'étendue longitudinale du pont (B) par rapport au support de pièce (W).

7. Machine selon l'une quelconque des revendications précédentes, **caractérisée en ce que** le support du pont (B) et/ou son guidage pour le coulissement par rapport au support de pièce (W) est disposé en dessous du centre de gravité du pont.

8. Machine selon l'une quelconque des revendications précédentes, **caractérisée en ce qu'**au moins chaque point de transmission de force du pont (B) à sa structure porteuse se situe dans une plage de +/- 100 mm de l'intersection du prolongement d'une surface limite (FB, 11) avec le bord supérieur de la structure de support (6).
